# EUROPÄISCHE PATENTSCHRIFT

(11) **EP 0 670 853 B1**
(45) Veröffentlichungstag und Bekanntmachung des Hinweises auf die Patenterteilung: **26.08.1998**
(21) Anmeldenummer: 94901808.9
(22) Anmeldetag: 16.11.1993
(51) Int. Cl.: C08G 18/12, C08G 18/40

(54) **VERWENDUNG EINES FEUCHTIGKEITSHÄRTENDEN POLYURETHAN-SCHMELZKLEBSTOFFES**
USE OF A MOISTURE-HARDENING POLYURETHANE FUSION ADHESIVE
UTILISATION D'UNE COLLE A FUSION EN POLYURETHANE DURCISSANT A L'HUMIDITE

(30) Priorität: 25.11.1992 US 982203
(43) Veröffentlichungstag der Anmeldung: 13.09.1995
(73) Patentinhaber: Henkel Kommanditgesellschaft auf Aktien, 40191 Düsseldorf (DE)
(72) Erfinder: HEIDER, Roland, D-40724 Hilden (DE)
(86) Internationale Anmeldenummer: EP9303216
(87) Internationale Veröffentlichungsnummer: WO9412552

(56) Entgegenhaltungen:
- EP-A- 0 369 607
- EP-A- 0 511 566
- WO-A-91/15530
- DE-A- 4 001 348
- GB-A- 2 233 657

## Beschreibung

Die Erfindung betrifft die Verwendung eines feuchtigkeitshärtenden Polyurethan-Schmelzklebstoffes.

Unter "feuchtigkeitshärtendem PolyurethanSchmelzklebstoff" wird ein weitgehend lösungsmittelfreier Klebstoff mit Urethan-Gruppen verstanden, der bei Raumtemperatur fest ist und nach der Applikation in Form seiner Schmelze nicht nur durch Abkühlen physikalisch bindet, sondern auch durch chemische Reaktion von noch vorhandenen Isocyanatgruppen mit Feuchtigkeit. Erst nach dieser chemischen Aushärtung unter Molekülvergrößerung erhält der Klebstoff seine endgültigen Eigenschaften.

Derartige feuchtigkeitshärtende PolyurethanSchmelzklebstoffe sind für verschiedene Substrate bekannt:
In der EP 0 421 154 wird ein schnell kristallisierendes, Isocyanatgruppen enthaltendes Polyurethan-System beschrieben, das auf einem Polyesterdiol A mit einem Schmelzpunkt von 30 bis 60 °C und einem Polyesterdiol B mit einem Schmelzpunkt von 65 bis 150 °C sowie einem Polyisocyanat D basiert. Es kann auch noch als Kettenverlängerer ein Diol C mit einem Molekulargewicht von < 400 enthalten. Das Polyurethan-System kann direkt aus diesen Komponenten in einer einzigen Stufe hergestellt werden, aber auch mehrere Stu-fen sind möglich. Das so erhaltene Polyurethan-System ist teilkristallin und soll als Montage-Klebstoff eingesetzt werden, insbesondere aber als Buchbinder-Klebstoff.
In der DE 32 36 313 wird ein Schmelzklebstoff beschrieben, der aus 20 bis 90 Gew.-% eines prepolymeren Isocyanats und 5 bis 50 Gew.-% eines niedermolekularen Keton-Harzes besteht sowie noch 0 bis 75 Gew.-% eines thermoplastischen Polyurethans enthalten kann. Bei dem prepolymeren Isocyanat handelt es sich um ein reaktives Polyurethanprepolymer aus
1. einem aromatischen Diisocyanat und/oder
2. einem Prepolymeren dieses Isocyanats sowie aus
3. einem Polyether oder einem Polyester mit OH-Gruppen und
4. einem kurzkettigen Diol.
In dem einzigen Herstellungsbeispiel werden neben 516 g eines Polyesterdiols noch 74 g Tripropylenglykol als Kettenverlängerungsmittel zugegeben. Das Prepolymere wird in einer einzigen Stufe aus den Komponenten hergestellt und hat eine Viskosität von 50 bis 40 000 Pa·s bei 20 °C. Der Schmelzklebstoff eignet sich zum Verkleben von thermoplastischen und duroplastischen Kunststoffen, Schaumstoffen, lackierten Oberflächen, Holz- und Holzwerkstoffen, Papier, Leder, Kunstleder, Gummi, Textilien, Non-woven-Materialien und Metallen.
In der EP 0 340 906 wird ein Polyurethan-Schmelzklebstoff beschrieben, der eine Mischung von mindestens 2 amorphen Polyurethan-Prepolymeren enthält, die dem Schmelzklebstoff unterschiedliche Glasumwandlungstemperaturen verleihen. Sie liegen einerseits über und andererseits unter Raumtemperatur. Die Prepolymeren werden aus Polyisocyanaten und unterschiedlichen Diolen hergestellt, nämlich vorzugsweise Polyesterdiolen einerseits und vorzugsweise Polyester-, Polyether- und anderen Polymer-Diolen andererseits. Der Schmelzklebstoff wird entweder durch Mischen der separat hergestellten Prepolymeren hergestellt oder durch die Her-stellung des zweiten Prepolymeren in dem ersten. Es werden in der Regel bei Raumtemperatur opake Schmelzklebstoffe erhalten, die nach dem Beispiel eine Viskosität von 91 Pa·s bei 130 °C haben. Der Polyurethan-Schmelzklebstoff wird zum Verkleben von Holz verwendet. In der EP 0 369 607 wird ein feuchtigkeitshärtender Polyurethan-Schmelzklebstoff beschrieben, der mindestens zwei Polyurethan-Prepolymere enthält, wobei das erste Prepolymer eine Glasumwandlungstemperatur über Raumtemperatur hat und das zweite Prepolymer eine Glasumwandlungstemperatur darunter. Der Schmelzklebstoff wird aus Polyisocyanat und verschiedenen Diolen hergestellt, nämlich aus einem Polyetherdiol einerseits und einem Polyether-, Polyester- oder Polybutadiendiol andererseits. Das Beispiel III enthält 8,5 Gew.-% eines Polyesterdiols. Der Polyurethan-Schmelzklebstoff soll in einer oder in mehreren Stufen hergestellt werden können. In der Regel ist er bei Raumtemperatur transparent und hat gemäß Beispiel I nur eine Glasumwandlungstemperatur. Seine Viskosität liegt entsprechend den Beispielen zwischen 6,8 und 20 Pa·s bei 130 °C. Der Schmelzklebstoff wurde zum Verkleben von Holz, Plastik und Stoff verwendet.
In der EP 0 472 278 wird ein Klebstoff aus einem Polyalkylenetherdiol, einem Polyalkylenethertriol, einem Polyesterpolyol und einem aliphatischen Isocyanat beschrieben. Es handelt sich dabei um einen feuchtigkeitshärtenden Schmelzklebstoff für Stoffe, Holz, Metall, Leder und Plastik.
In der EP 0 242 676 wird ein Verfahren zur Herstellung von aromatenlöslichen, als Lackbindemittel geeigneten, freie Isocyanatgruppen aufweisenden Polyurethanen beschrieben, die durch Umsetzung von Diisocyanaten, Makropolyolen des Molekulargewichtes 500 bis 10 000 und niedermolekularen Polyolen des Molekulargewichtes 62 bis 499 erhalten werden. Bei den letzteren handelt es sich um stark verzweigte Diole wie z.B. 2,2,4-Trimethylpentandiol-1,3, dessen Hydroxylgruppen noch mit ein oder zwei Ethoxy- oder Propoxyeinheiten verethert sein können. Die Polyurethane liegen als Lösung vor und werden als Bindemittel in feuchtigkeitshärtenden Einkomponentenlacken verwendet.
In der EP 0 511 566 wird ein feuchtigkeitshärtender
Polyurethan-Schmelzklebstoff beschrieben, der aus a) einer bei Raumtemperatur flüssigen Polyolkomponente mit einem mittleren Molekulargewicht von 500 bis 5 000 und b) einer bei Raumtemperatur kristallinen Polyolkomponente mit einem Molekulargewicht von 500 bis 10 000 sowie einem Gemisch aus einer Polyisocyanat-Komponente mit 2 unterschiedlich reaktiven NCO-Gruppen und einer Diisocyanatkomponente mit einer NCO-Reaktivität gegenüber Hydroxygruppen, die größer ist die der weniger reaktiven NCO-Gruppen der PolyisocyanatKomponente mit zwei unterschiedlich reaktiven NCO-Gruppen. Die Schmelzklebstoffe werden vorzugsweise zum Verkleben von Glas und Glas-Kunststoff-Verbunden verwendet.
In der EP 0 455 400 wird ein feuchtigkeitshärtender Polyurethan-Schmelzklebstoff beschrieben, der im wesentlichen aus folgender Mischung besteht:
a) 10 bis 90 Gew.-Teile eines ersten PolyurethanPrepolymeren aus Polyhexamethylenadipat und
b) 90 bis 10 Gew.-Teilen eines zweiten PolyurethanPrepolymeren aus Polytetramethylenglykol mit einem Molekulargewicht Mn von mindestens 500.
Dieser Schmelzklebstoff eignet sich zum Verkleben von einigen synthetischen Polymeren, Holz, Papier, Leder, Gummi, Textilien einschließlich Non-wovens, und Metallen.

In der GB-A-2 233 657 wird ein lösungsmittelfreier Schmelzklebtoff offenbart, der auf einem Polyurethan-Prepolymer basiert. Dieses Prepolymer kann sich aus Polypropylenglykol (M.G. 2000), 1,6-Hexandioladipat (M.G. von 3000) und Methylen-Bisphenyldiisocyanat zusammensetzen (siehe Beispiel II). Aus den Gewichtsangaben in diesem Beispiel geht deutlich hervor, daß der Anteil an Polypropylenglykol mehr als 10 Gew.-% ist.

In der WO 91 15530 wird ebenfalls ein Schmelzklebtoff auf der Basis von Polyurethan-Prepolymeren offenbart. Das Prepolymer ist ein Umsetzungsprodukt von Polyisocyanaten und einer Mischung aus Polyalkylenglykolen und Polyesterpolyolen (siehe Seite 10, Zeile 24 bis Seite 11, Zeile 13). Aus Beispiel IV, Zeile 25 ergibt sich, daß Polyalkylenglykol in einem Anteil von mehr als 10 Gew.-% vorhanden ist.

Es ist auch bekannt, feuchtigkeitshärtende Polyurethan-Schmelzklebstoffe in der Schuhindustrie zu verwenden.
So wird in der EP 0 125 008 ein Verfahren zum Verbinden einer Sohle mit einem Schuhoberteil beschrieben. Das Polyurethan wurde aus einem Diisocyanat, einem Hydroxypolyester und einem monofunktionellen Reaktanten hergestellt, wobei der monofunktionelle Reaktant vorzugsweise ein aliphatischer Alkohol mit 4 bis 14 Kohlenstoffatomen und einem Siedepunkt über 100 °C ist. Nach dem Auftrag des Klebstoffs und vor der eigentlichen Verklebung durch Erwärmen und Pressen wird der Klebstoff der Luftfeuchtigkeit ausgesetzt, um die Ketten zu verlängern. Dazu sind 10 bis 15 Minuten bei 80 bis 110 °C und eine Feuchtigkeit, die einem Taupunkt von 40 bis 60 °C entspricht, sowie eine anschließende Behandlung bei atmosphärischer Feuchtigkeit für 10 Minuten bis 18 Stunden notwendig.
Ein weiteres Verfahren zur Befestigung einer Sohle an einem Schuh ist in der EP 0 223 562 beschrieben. Zunächst wird ein feuchtigkeitshärtender lösungsmittelfreier Schmelzklebstoff auf die Sohle und/oder das Schuhobermaterial aufgebracht, dann wird die Klebstoffbeschichtung einer Heißhärtung mit Feuchtigkeit unterzogen, bis schließlich Sohle und Schuhobermaterial zusammengepreßt werden.
In der DE 26 09 266 wird ebenfalls ein Verfahren zum Verbinden von Schuhsohlen mit Schuhoberteilen beschrieben. Der Schmelzklebstoff wurde hergestellt durch Umsetzung eines Diisocyanats mit einem polymeren Polyol mit einem kristallinen Schmelzpunkt im Bereich von 40 bis 90 °C. Nach dem Auftrag des Schmelzklebstoffs wird dieser z.B. mit Wasser in Kontakt gebracht und der so behandelte Überzug dann in einem durch Wärme erweichten Zustand gegen eine damit verträgliche Oberfläche gepreßt.

Die bekannten feuchtigkeitshärtenden Polyurethan-Schmelzklebstoffe weisen jedoch gravierende Nachteile bei ihrer Anwendung in der Schuhindustrie auf, die einer wirtschaftlichen Anwendung im breiten Umfang bisher entgegenstanden:
- Der Klebstoff sollte möglichst keine giftigen Stoffe enthalten, insbesondere keine Lösungsmittel.
- Es sollte bei einer Temperatur aufgetragen werden können, die für die Schuhmaterialien nicht zu hoch ist.
- Die zu verbindenden Schuhmaterialien sind vor allem Leder und Gummi.
- Der Klebstoff sollte bei der Applikationstemperatur ein geeignetes Fließverhalten und eine gute Benetzung haben, so daß er problemlos aufgetragen werden kann.
- Die Klebeverbindung sollte von Anfang an eine ausreichende Festigkeit für die weitere Verarbeitung haben. Das gilt insbesondere für die Kriechfestigkeit und die Anfangsfestigkeit, wobei die Aushärtung in angemessener Zeit und möglichst unter Umgebungsbedingungen erfolgen sollte. Das heißt, der Klebstoff sollte innerhalb weniger Minuten so weit aushärten, daß seine Oberfläche nicht mehr klebrig ist, damit beschichtete Sohlen und Schuhoberteile nach dem Abkühlen problemlos gehandhabt und gelagert werden können, ohne daB sie zusammenkleben. Auch sollte die Bindung zwischen der Sohle und dem Schuhoberteil von Anfang an so fest sein, daß sie sich weder sofort noch nach einer Lagerung infolge geringer, aber ständiger Kräfte löst. Es muß also eine ausreichende Anfangsfestigkeit und vor allem eine hohe Kriechfestigkeit innerhalb der Taktzeiten der Schuhproduktion erzielt werden. Wünschenswert ist eine Aushärtung unter normalen Umgebungsbedingungen der Sohlenlagerung (20 ± 5 °C, ca. 10 % relative Luftfeuchtigkeit) in möglichst 24 Stunden, jedoch spätestens in 7 Tagen.
- Die Klebeverbindung sollte beim Gebrauch ausreichend fest und flexibel sein. Insbesondere ist die Kälteflexibilität von Bedeutung.

Die erfindungsgemäße Aufgabe besteht also darin, einen feuchtigkeitshärtenden Polyurethan-Schmelzklebstoff für die Schuhindustrie bereitzustellen, der mit Maschinen auftragbar ist, die in der Schuhproduktionslinie integriert sind, die keine Vorvernetzung mit Dampf und keine Trocknung in einem Klimakanal enthalten. Dazu müssen sie insbesondere eine hohe Kriechfestigkeit bei ausreichender Anfangsfestigkeit und Endfestigkeit in angemessener Zeit erreichen. Die übrigen Verarbeitungs- und Gebrauchseigenschaften sollten nicht verschlechtert werden. Das gilt insbesondere für die Giftigkeit und Kälteflexibilität.

Die erfindungsgemäße Lösung ist den Patentansprüchen zu entnehmen. Sie besteht in der Verwendung eines feuchtigkeitshärtenden Polyurethan-Schmelzklebstoffes, der folgende Komponente enthält:
A) mindestens ein Polyurethan-Prepolymer aus
   a) mindestens einem Polyisocyanat,
   b) mindestens einem Polyalkylenglykol in einer Konzentration von mehr als 10 Gew.-%, bezogen auf den Schmelzklebstoff insgesamt,
   c) mindestens einem Polyesterglykol mit einer Glasumwandlungstemperatur von -40 bis +50 °C und
B) gegebenenfalls Zusätzen wie
   d) ein Harz und
   e) einen Stabilisator
in der Schuhindustrie.

Unter einem "Polyurethan-Prepolymer" ist ein Oligourethan mit Isocyanat-Gruppen zu verstehen, das als Zwischenstufe zu den vernetzten Polyurethanen anzusehen ist. Mit "mindestens" ein Polyurethan-Prepolymer ist gemeint, daß der Klebstoff mindestens ein Maximum in der Verteilungskurve der Molekulargewichte hat. In der Regel entspricht deren Anzahl der Anzahl der separat hergestellten Prepolymere, aus denen sich bei rein physikalischer Mischung der Polyurethan-Schmelzklebstoff ergibt. Die obere Grenze der Anzahl der Prepolymeren liegt also aus Praktikabilitätsgründen bei 3.

Unter einem "Polyisocyanat" ist eine niedermolekulare Verbindung mit 2 oder 3 Isocyanat-Gruppen zu verstehen. Die Diisocyanate werden bevorzugt, sie können aber bis zu ca. 10 Gew.-% an trifunktionellem Isocyanat enthalten. Mit steigendem Gehalt an trifunktionellem Isocyanat ist allerdings mit ungewollten Vernetzungen sowohl bei der Herstellung als auch bei der Verwendung des Schmelzklebstoffs zu rechnen. Neben aliphatischen und cycloaliphatischen Polyisocyanaten kommen vor allem aromatische Polyisocyanate in Frage. Konkrete Beispiele sind: Toluoldiisocyanat, Diphenylmethandiisocyanat und deren Mischungen. Unter Diphenylmethandiisocyanat wird sowohl das 4,4'- als auch das 2,4'-Diphenylmethandiisocyanat verstanden. Vorzugsweise sollte das 2,4'-Isomere aber nicht mehr als 50 Gew.-% ausmachen. Es werden vorzugsweise ein oder zwei verschiedene Polyisocyanate eingesetzt. Vor allem wird reines 4,4'-Diphenylmethandiisocyanat verwendet. Seine Mischung mit dem 2,4'-Isomeren beeinflußt unter anderem den Gehalt an nicht umgesetztem Diisocyanat, die thermische Stabilität sowie die Länge der Reaktivierbarkeit des Klebstoff-Films. Der Anteil des Polyisocyanates im Schmelzklebstoff sollte 15 bis 35, vorzugsweise 20 bis 30 Gew.-% betragen.

Unter einem "Polyalkylenglykol" wird ein linearer Polyether mit 2 OH-Gruppen verstanden. Er hat vorzugsweise die allgemeine Formel HO(-R-O)ₘ-H, wobei R ein Kohlenwasserstoffrest mit 2 bis 4 C-Atomen ist. Es kommen auch Copolymere in Frage, und zwar sowohl Blockpolymere als auch statistische Copolymere. Konkrete Polyalkylenglykole sind: Polyethylenglykol, Polytetramethylenglykol und vor allem Polypropylenglykol (R = -CH₂-CH(CH₃)-) vorzugsweise wird nur eine Art von Polyalkylenglykolen eingesetzt. Es können aber auch Mischungen verwendet werden aus 2 bis 3 Polyalkylenglykolen, die sich in ihrem mittleren Molekulargewicht oder in der Art ihrer Bausteine unterscheiden.
Die Menge des einzusetzenden Polyalkylenglykols - insbesondere des Polypropylenglykols - beträgt mindestens 10 Gew.-%, vorzugsweise 10 bis 70 und insbesondere 15 bis 35 Gew.-%, jeweils bezogen auf den Polyurethan-Schmelzklebstoff insgesamt.

Vor allem ist reines Polypropylenglykol interessant. Sein mittleres Molekulargewicht sollte in der Regel zwischen 250 und 1 000, vorzugsweise zwischen 350 und 600 und ganz besonders zwischen 400 und 450 liegen. (Gemeint ist das Zahlenmittel aufgrund von OH-Bestimmungen). Außerhalb des angegebenen Bereiches tritt eine deutliche Verringerung der positiven Wirkungen ein. Diese liegen unter anderem in der hohen Anfangsfestigkeit (= Festigkeit vor der Härtung), in der hohen Kriechfestigkeit (= Formbeständigkeit unter Einfluß von kleinen aber ständigen Kräften) und in den guten FlieBeigenschaften bei den Anwendungstemperaturen.
Für diesen Zweck können unter Umständen auch andere Polymerdiole außerhalb des bevorzugten Bereiches eingesetzt werden, z.B. Polyesterdiole mit dem gleichen Molekulargewicht oder Tetraethylenglykol in der gleichen Menge wie Polypropylenglykol, vorzugsweise sollte die Menge dieser Polymerdiole, die außerhalb der bevorzugten Bereiche liegen, nicht größer als die der bevorzugten Polyalkylenglykole sein.

Unter einem "Polyesterglykol" wird ein Polyester mit 2 OH-Gruppen verstanden, vorzugsweise mit 2 endständigen OH-Gruppen. Sie werden auf bekanntem Wege hergestellt, sei es aus
a) aliphatischen Hydroxycarbonsäuren oder aus
b) aliphatischen Dicarbonsäuren mit 6 bis 12 C-Atomen und - insbesondere geradzähligen - Diolen mit 4 bis 8 C-Atomen.
Natürlich können auch entsprechende Derivate eingesetzt werden, z.B. Lactone, Methylester oder Anhydride. Konkrete Ausgangsprodukte sind: 1,4-Butandiol, 1,4-Hexandiol, Adipin-, Azelain-, Sebazinsäure und Lacton. Die Säurekomponente kann bis zu 25 Mol-% einer anderen Säure enthalten, z.B. Cyclohexandicarbonsäure, Terephthalsäure und Isophthalsäure. Die Glykolkomponente kann bis zu 15 Mol-% eines anderen Diols enthalten, z.B. Diethylenglykol, 1,4-Cyclohexandimethanol. Neben Homopolymeren aus obigen Bausteinen sind vor allem Copolyester aus den folgenden Bausteinen oder deren Derivate wichtig:
1. Adipinsäure, Isophthalsäure, Phthalsäure und Butandiol,
2. Adipinsäure, Phthalsäure und Hexandiol,
3. Adipinsäure, Isophthalsäure, Phthalsäure, Ethylenglykol, Neopentylglykol und 3-Hydroxy-2,2-dimethylpropyl-3-hydroxy-2,2-dimethylpropanoat und
4. Adipinsäure, Phthalsäure, Neopentylglykol und Ethylenglykol.
Der Copolyester aus Adipinsäure, Isophthalsäure, Phthalsäure und Butandiol ist teilweise kristallin und hat eine hohe Viskosität. Er führt daher zu hohen Anfangsfestigkeiten. Der Copolyester aus Adipinsäure, Phthalsäure und Hexandiol hat eine niedrige Glasübergangstemperatur und führt daher zu einer verbesserten Kälteflexibilität.
Die Polyesterglykole sind also flüssig oder fest. Wenn sie fest sind, sind sie vorzugsweise amorph. Sie können aber auch schwachkristallin sein. Vorzugsweise wird eine Mischung aus teilweise kristallinen und amorphen Polyestern eingesetzt. Die Kristallinität ist allerdings so wenig ausgeprägt, daß sie sich in dem fertigen Schmelzklebstoff nicht durch Trübung bemerkbar macht. Der Schmelzpunkt der teilkristallinen Polyester liegt im Bereich von 40 bis 70 °C, vorzugsweise im Bereich von 45 bis 65 °C. Der Schmelzpunkt gibt die Temperatur an, bei der die kristallinen Bereiche des Materials schmelzen. Er wird differential-thermoanalytisch bestimmt durch den Endotherm-Hauptpeak. Vorzugsweise wird ein Polybutandioladipat mit einem Molekulargewicht von etwa 3 500 und einem Schmelzpunkt von etwa 50 °C als teilweise kristallines Polyesterglykol verwendet.

Das mittlere Molekulargewicht des Polyesterglykols (Mn) sollte zwischen 1 500 und 30 000 liegen, vorzugsweise zwischen 2 500 und 6 000. Es wird aus der OH-Zahl berechnet. Das Molekulargewicht des Polyesterglykols ist von gewisser Bedeutung: Mit zunehmendem Molekulargewicht wird die Extrusion des Schmelzklebstoffs und die Penetration in Leder erschwert, mit abnehmendem Molekulargewicht wird der Schmelzklebstoff bei Raumtemperatur nicht genügend fest.
Die Polyesterglykole haben eine Glasumwandlungstemperatur (Tg) im Bereich von 40 °C bis +50 °C und insbesondere im Bereich von -40 bis +40 °C. Die Tg wird aufgrund von DSC-Messungen mit einer Geschwindigkeit von 10 °C/Min. im zweiten Lauf als Mittelpunkt der Stufe bestimmt. Zu den besonders geeigneten Polyesterglykolen gehören solche mit einer Glasübergangstemperatur von etwa -40 °C bis +40 °C, mit einer Viskosität von etwa 3 000 bis etwa 30 000 mPa.s bei 130 °C (Brookfield, RVDV II + Thermosel) und mit einer Hydroxylzahl von etwa 27 bis 60.

Vorzugsweise wird ein Gemisch aus 2 bis 6, insbesondere 2 bis 4 Polyesterglykolen mit unterschiedlicher Glasumwandlungstemperatur eingesetzt. Zumindest ein Polyesterglykol sollte eine Glasumwandlungstemperatur unter und einer über 0 °C haben, wobei die Glasumwandlungstemperatur mindestens 10, vorzugsweise mindestens 30 °C auseinan-der liegen. Der Anteil der Polyesterglykole mit der niedrigen Glasumwandlungstemperatur sollte im Bereich von 30 bis 100 Gew.-%, vorzugsweise von 50 bis 90 Gew.-% liegen, bezogen auf die Ge-samtmenge an Polyesterglykol.

Die Kriechfestigkeit des Schmelzklebstoffes (= Formbeständigkeit der Verklebung gegen irreversible Verformung bei Einwirkung geringer Kräfte über längere Zeit) wird nicht nur durch die Polyesterglykole, sondern auch durch den Zusatz eines Kohlenwasserstoffharzes verbessert. Darunter werden Petroleum, Kohlenteer- und Terpenharze verstanden. Sie haben im allgemeinen ein Molekulargewicht von weniger als 2 000. Bevorzugte Kohlenwasserstoffharze sind modifizierte aromatische Kohlenwasserstoff-Harze, Terpen-Harze wie z.B. α- und β-Pinen-Polymere, niedermolekulare Poly-styrole wie etwa Poly-α-methylstyrol, Kolophoniumester und Cumaron/lndenHarze. Natürlich wirken diese Stoffe auch als Klebrigmacher. Ihr Gewichtsanteil am Schmelzklebstoff beträgt 0 bis 15, insbesondere 3 bis 10 Gew.-%.

Mit den Stabilisatoren sind Zusätze gemeint, die die physikalischen Eigenschaften möglichst konstant halten sollen, insbesondere die Schmelzviskosität und die Farbe. Dazu kann mindestens einer der folgenden beispielhaft genannten Stoffe verwendet werden: Phosphorsäure, phosphorige Säure und Toluol-sulfonyl-isocyanat. Zweckmäßigerweise werden 0 bis 0,5, insbesondere 0,01 bis 0,1 Gew.-% des Stabilisators Toluol-sulfonyl-isocyanat zugesetzt.

Zur Beschleunigung der Härtungsreaktion können die bekannten Polyurethan-Katalysatoren zugesetzt werden, z.B. Diorganozinn-Verbindungen wie etwa Dibutylzinn-dilaurat oder eine Mercaptozinn-Verbindung. Ihre Menge reicht von 0 bis 1,5, insbesondere von 0,5 bis 1 Gew.-%, bezogen auf das Gewicht des Prepolymers.

Vorzugsweise enthalten die erfindungsgemäß zu verwendenden Schmelzklebstoffe jedoch keinerlei Lösungsmittel. Darunter werden inerte, organische Verbindungen mit einem Siedepunkt bis zu 200 °C bei Normaldruck verstanden. Die Schmelzklebstoffe enthalten ferner vorzugsweise keine inerten Füllstoffe wie z.B. Tone, Carbonate und Titandioxid .

Der erfindungsgemäß zu verwendende Schmelzklebstoff wird aus den obigen Komponenten, vorzugsweise folgendermaßen zusammengesetzt:
a) 15 bis 35 Gew.-% an Polyisocyanat,
b) 10 bis 70, insbesondere 15 bis 35 Gew.-% an Polyalkylenglykol,
c) 5 bis 65, insbesondere 30 bis 50 Gew.-% an Polyesterglykol,
d) 0 bis 15, insbesondere 3 bis 10 Gew.-% an Harz und
e) 0 bis 0,5, insbesondere 0,01 bis 0,1 Gew.-% an Stabilisator.

Wichtig ist aber nicht nur der Gewichtsbereich der einzelnen Komponenten, sondern auch ihr Gewichtsverhältnis zueinander. So sollte das Verhältnis der reaktiven Gruppen NCO : OH 1,1 : 1 bis 2 : 1 betragen, insbesondere 1,15 : 1 bis 1,5 : 1. Das für eine konkrete Klebstoffzusammensetzung zu wählende NCO : OH-Verhältnis ist so zu wählen, daß der Schmelzklebstoff ein brauchbares Molekulargewicht hat, d.h. es sollte hoch genug sein, um eine gute Anfangsfestigkeit zu erge-ben, andererseits aber niedrig genug sein, damit die Viskosität auch ohne Lösungsmittel - ausreichend niedrig sowohl beider Her-stellung als auch bei der Anwendung ist. Außerdem sollte der Schmelzklebstoff noch mindestens 0,5 bis 3, vorzugsweise 1,0 bis 2 g an freien NCO-Gruppen pro 100 g Schmelzklebstoff haben, um eine aus-reichende Härtung mit Feuchtigkeit zu ergeben. Der NCO-Gehalt wird bestimmt durch Titration.

Die Schmelzviskosität des erfindungsgemäß zu verwendenden Polyurethan-Schmelzklebstoffes liegt im allgemeinen im Bereich von 10 bis 300 Pas, vorzugsweise im Bereich von 20 bis 100. Die Schmelzviskosität wird bei 130 °C nach Brookfield gemessen, indem man die Probe 15 min bei 130 °C vorwärmt und anschließend den Wert abliest.

Die Art und die Menge der einzelnen Komponenten ist außerdem auch so zu wählen, daß sie verträglich sind. Ein Anzeichen dafür ist darin zu sehen, daß das Polyurethan-Prepolymer vorzugsweise nur eine Glasumwandlungstemperatur (Tg) im DSC-Diagramm hat. Maßgeblich ist dabei der zweite Lauf bei einer Temperaturerhöhung von 10 °C/Min..

Das Polyurethan-Prepolymer gemäß der Erfindung kann sowohl in einer Stufe als auch in mehreren Stufen hergestellt werden. Bei dem mehrstufigen Verfahren wird z.B. zunächst das Polyisocyanat mit dem Polyalkylenglykol bzw. mit dem Polyesterglykol separat umgesetzt und dann die Umsetzungsprodukte miteinander gemischt. Möglich ist auch die Umsetzung des Polyisocyanats zunächst nur mit dem Polyalkylenglykol oder nur dem Polyesterglykol und die weitere Umsetzung dieses Vorproduktes in Gegenwart aller übrigen Reaktionsteilnehmer.
Vorzugsweise wird jedoch das Polyurethan-Prepolymer gemäß der Erfindung im Einstufenverfahren hergestellt. Dazu werden die Polyester- und Polyalkylenglykole zunächst gemischt und dann 60 Min. bei 110 bis 130 °C unter Vakuum dehydratisiert. Nach Abkühlung der Mischung auf etwa 90 °C wird dann das Polyisocyanat zugesetzt. Das Reaktionsgemisch wird wiederum auf 110 bis 130 °C erwärmt. Wenn kein Katalysator zugesetzt wird, dauert es im allgemeinen ca. 60 Min., bis unter Vakuum die Umsetzung praktisch beendet ist, d.h. OH-Gruppen nicht mehr nachweisbar sind, bzw. höchstens einer Menge von 2 g/100 g Prepolymer vorhanden sind, oder aber die gewünschte Viskosität erreicht ist.

Falls die gewünschten Zusätze nicht bereits während der Bildung des Polyurethan-Prepolymers zugesetzt wurden, müssen sie nun zugesetzt und homogenisiert werden.

Da das Polyurethan-Prepolymer reaktive NCO-Gruppen aufweist, ist der Polyurethan-Schmelzklebstoff gegenüber Feuchtigkeit aus der Luft empfindlich. Es ist daher erforderlich, ihn während der Lagerung gegen Feuchtigkeit zu schützen. Dazu wird erzweckmäßigerweise in einem verschlossenen, trockenen und feuchtigkeitsundurchlässigen Behälter aus Aluminium, Weißblech oder Verbundfolien aufbewahrt.

Der erfindungsgemäß zu verwendende Schmelzklebstoff zeichnet sich im wesentlichen durch folgende wertvolle Eigenschaften aus:
- Er enthält kein Lösungsmittel. Die Konzentration desnicht umgesetzten MDls beträgt weniger als 2,0 %, insbesondere weniger als 1,0 Gew.-%.
- Er ist bei der Lagerung stabil, d.h. es findet keine Entmischung statt. Er ist bei der Auftragungstemperatur von z.B. 170 °C relativ stabil, d.h. die Schmelzviskosität schwankt in einem Bereich von + max. einem Drittel, vorzugsweise einem Fünftel des Aus-gangswertes innerhalb von 4 Stunden.
- Er läßt sich bei 110 bis 180 °C leicht als frei fließende Schmelze auftragen.
- Sowohl Gummi als auch Leder werden ausreichend benetzt, und der Schmelzklebstoff dringt sogar relativ tief in faserige Materialien ein.
- Vor der Verfestigung bleibt genügend Zeit zur relativen Positionierung der Fügeteile.
- Beim Abkühlen unter den Umgebungsbedingungen entstehen sofort Bindungen mit einer hohen Anfangsfestigkeit und einer hohen Kriechfestigkeit. Auch sind die Schichten nach der Abkühlung nicht klebrig.
- Innerhalb der üblichen Lagerzeiten für Schuhhalbfabrikate werden annehmbare Festigkeiten erreicht. Die Verklebungen sind außerdem auch bei tiefen Temperaturen flexibel.
- Die Verklebung ist transparent.
- Die Verklebung ist nach der Aushärtung sehr beständig gegenüber Wasser.

Aufgrund dieser positiven Eigenschaften eignen sich die Schmelzklebstoffe zur Verwendung in der Schuhindustrie, insbesondere in Auftragsmaschinen, die in die Schuhproduktionslinie integrierbar sind, die keine Vorvernetzungsstufe mit Dampf bzw. Trockenkanal enthält.
Mit "Schuh" ist die äußere Fußbekleidung gemeint, und zwar nicht nur das verkaufsfähige Endprodukt, sondern auch die Zwischenprodukte dafür.
Mit "Sohle" ist die Schuhlauffläche gemeint, wobei die Absätze mit eingeschlossen sind.
Die erfindungsgemäß zu verwendenden Schmelzklebstoffe eignen sich besonders vorteilhaft zum Befestigen von Sohlen an Schuhoberteilen, darüber hinaus aber auch zum Befestigen von unter Spannung stehenden Substraten und zum Verkleben von Leder.
Gegenstand der Erfindung ist daher auch die Verwendung der erfindungsgemäßen Klebstoffe zum Befestigen von Sohlen am Schuhobermaterial, insbesondere aus Leder, und zwar in folgenden Arbeitsschritten:
1. Gegebenenfalls Vorbehandlung der Sohle und/oder des Schuhobermaterials, z.B. durch Aufrauhen, Grundieren, Halogenieren, Abwischen mit Lösungsmitteln usw.,
2. Auftrag einer Schicht des Schmelzklebstoffes bei 110 bis 180 °C auf mindestens eine der zu befestigenden Flächen, wobei die andere entweder keinen Klebstoff zu enthalten braucht oder aber einen Lösungsmittelklebstoff bzw. einen Dispersionsklebstoff,
3. Zusammendrücken der zu verklebenden Flächen und
4. gegebenenfalls Kühlen der zu verklebenden Fläche.
Vor dem Auftrag des Schmelzklebstoffes werden die Sohle bzw. das Schuhobermaterial zweckmäßigerweise vorbehandelt. Dabei handelt es sich um bekannte Methoden wie z.B. Aufrauhen, Abwischen mit Lösungsmitteln oder Grundieren mit einem Primer oder Halogenieren von bestimmten Gummikomponenten.

Der Schmelzklebstoff enthält beim Auftragen vorzugsweise kein Lösungsmittel. Der Klebstoff wird vorzugsweise mit einer Auftragsmaschine in einer Dicke von 0,05 bis 0,7 mm aufgetragen. Nach dem Auftrag einer Schicht des Schmelzklebstoffes und vor dem Zusammendrücken der zu verklebenden Flächen kann der Schmelzklebstoff auch abgekühlt und das vorgefertigte Material gelagert werden, solange eine Aushärtung vermieden wird. Vor dem Zusammendrücken ist dann die Probe wieder auf 110 bis 180 °C zu erwärmen, wenn der Klebstoff nur auf ein Substrat appliziert wurde, und auf 50 bis 100 °C, wenn beide Substrate mit Klebstoff beschichtet wurden.

Die Aushärtung kann unter verschiedenen Bedingungen durchgeführt werden. Insbesondere sind sie durch Einwirkung von Feuchtigkeit aus der Luft erreicht. Dazu sollte die relative Luftfeuchtigkeit mehr als 25 % bei 20 °C betragen. Unter diesen Bedingungen dauert die Aushärtung mindestens 24 Stunden. Die Umgebungsbedingungen können allerdings auch schwanken, z.B. im Bereich von 20 + 5 °C. Die relative Luftfeuchtigkeit sollte allerdings nicht weniger als 10 % betragen, um in einem Zeitraum von 3 bis 7 Tagen zu einer Aushärtung zu kommen.

Bei der erfindungsgemäßen Verwendung des Schmelzklebstoffes in der Schuhindustrie ergeben sich folgende Vorteile:
- Er ermöglicht ein System, welches ohne weiteres in die Produktionslinie integrierbar ist.
- Aufgrund der hohen Kriech- und Anfangsfestigkeit ermöglicht er eine deutlich höhere Produktivität.
- Die Festigkeit der Verklebungen mit Leder ist überraschend gut.
- Unter Umständen reicht ein einseitiger Auftrag, z.B. mit PU-Sohlen.

Gegenstand der Erfindung sind daher auch die unter Verwendung des Klebstoffes hergestellten Schuhe.

Die Erfindung wird nun anhand von Beispielen im einzelnen erläutert.

### Beispiele

### A) Ausgangsstoffe:

Polyester A ist ein teilweise kristallines Copolyester-Glykol aus Isophthalsäure, Butandiol, Phthalsäuredimethylester und Adipinsäure. Polyester A besitzt ein Molekulargewicht von etwa 3500, eine Hydroxyl-Zahl von 27 bis 34, bestimmt nach DIN 53 240, eine Glasübergangstemperatur von etwa -20 °C, bestimmt mittels DSC, und eine Viskosität bei 100 °C von etwa 30 000 mPa·s und bei 130 °C von etwa 5000 mPa·s, bestimmt mit einem Brookfield-Viskosimeter (LVT4).

Polyester B ist ein teilweise kristallines Copolyester-Glykol aus Phthalsäuredimethylester, Adipinsäure und Hexandiol. Es besitzt ein Molekulargewicht von etwa 3500, eine Hydroxyl-Zahl von 27 bis 34, bestimmt nach DIN 53 240, eine Glasübergangstemperatur von etwa -40 °C, bestimmt mittels DSC, und eine Viskosität bei 130 °C von etwa 3000 mPa·s, bestimmt mit einem Brookfield-Viskosimeter (LVT4).

Polyester C ist ein festes amorphes Copolyester-Glykol aus Isophthalsäure, Neopentylglykol, Ethylenglykol, Adipinsäure, Phthalsäure und 3-Hydroxy-2,2-dimethylpropyl-3-hydroxy-2,2-dimethylpropanoat. Es besitzt ein Molekulargewicht von etwa 3500, eine Hydroxyl-Zahl von 31-39, bestimmt nach DIN 53 240, eine Glasübergangstemperatur von etwa +30 °C, bestimmt mittels DSC, und eine Viskosität bei 130 °C von etwa 30 000 mPa·s, bestimmt mit einem Brookfield-Viskosimeter (LVT4).

Polyester D ist eine festes amorphes Copolyester-Glykol aus Neopentylglykol, Ethylenglykol, Adipinsäure und Phthalsäureanhydrid. Es besitzt ein Molekulargewicht von etwa 2000, eine Hydroxyl-Zahl von 50-60, bestimmt nach DIN 53 240, eine Glasübergangstemperatur von etwa +10°C, bestimmt mittels DSC, und eine Viskosität bei 80°C von etwa 70 000 mPa·s, und bei 130°C von etwa 5000 mPa·s, bestimmt mit einem Brookfield-Viskosimeter (LVT4).

Polyester H ist ein sehr schwach kristalliner, gesättigter Copolyester-Glykol mit einer Viskositätszahl von 77-83 cm³/g, bestimmt nach DIN 53 728, einem Erweichungspunkt von 102-110°C, bestimmt nach DIN 52 011, einer Glasübergangstemperatur von etwa -12°C, bestimmt mittels DSC, und einer Schmelzviskosität bei 180°C von etwa 65-75 Pa·s und bei 200°C von etwa 35-40 Pa·s, bestimmt mit Rotationsviskosimeter (Platte/Kegel). Mit einem Molekulargewicht von ca. 25 000 aufgrund der OH-Zahl.

Polyester I ist ein festes amorphes Copolyester-Glykol mit einem Molekulargewicht von etwa 3500, einer Hydroxyl-Zahl von 27-34, bestimmt nach DIN 53 240, einer Glasübergangstemperatur von etwa 20°C, bestimmt mittels DSC, und einer Viskosität bei 130°C von etwa 7000 mPa·s, bestimmt mit einem Brookfield-Viskosimeter (LVT4). Die Polyester-Materialien sind im Handel zu beziehen durch Hüls AG, Troisdorf, Deutschland.

Das Polypropylenglykol besitzt ein Molekulargewicht von etwa 425 und ist erhältlich bei Miles Inc., Pittsburgh, PA.

Der Klebrigmacher ist ein polymerisiertes β-Pinen-Harz, erhältlich bei Hercules Inc., Wilmington.

Das Kohlenwasserstoff-Harz ist zu beziehen bei Arizona Chemical Co., Panama City, und dient als Klebrigmacher und zur Erhöhung der Kriechfestigkeit.

Das Diphenylmethan-4,4'-diisocyanat (MDI) ist erhältlich bei Miles Inc., Pittsburgh.

### B) Herstellung

Bei den folgenden Beispielen wurden die Polyurethan-Klebstoffe hergestellt durch etwa 60minütiges Dehydratisieren der angegebenen Mengen an Polyesterglykol oder Polyesterglykol-Mischung und Polypropylenglykol und gegebenenfalls an polymerisiertem β-Pinen-Harz bei einer Temperatur von etwa 110 bis etwa 130 °C unter Vakuum. Nach Kühlen auf etwa 90 °C wurde die Mischung mit der angegebenen Menge Diphenylmethan-4,4'-diisocyanat (MDI) versetzt und bei einer Temperatur von etwa 110 bis 130 °C unter Vakuum etwa 60 Min. lang umgesetzt. Im Anschluß an die Reaktion wurde das Prepolymer in einen feuchtigkeitsdichten Behälter gegeben.

### C) Untersuchung

Die Viskosität wurde mit einem Brookfield Thermocell-Viskosimeter gemessen: Nach 15minütigem Erwärmen eines Röhrchens mit der Polyurethan-Schmelze auf die angegebenen Temperaturen wurde der Wert abgelesen. Die Schmelzstabilität der Polyurethan-Schmelze wurde durch Messen der Viskositätszunahme im Laufe von 2 Stunden meistens bei 130 °C bestimmt.

Die Schälfestigkeit wurde an 2,5 cm breiten und 10 bis 12 cm langen Testproben aus SBR (Styrol/Butadien-Kautschuk) untersucht. Die Streifen wurden etwa 5 s in eine Primerlösung getaucht und dann etwa 30 min lang in einem Ofen bei 100°C getrocknet. Das Schuhoberteilmaterial war entweder Leder oder Polyurethan-beschichtetes Gewebe, das in herkömmlicher Weise aufgerauht wurde. Der Klebstoff wurde in einer Schicht von etwa 0,5 mm Dicke auf der erwärmten und grundierten SBR-Probe aufgetragen. Das erwärmte Schuhoberteil wurde zunächst mit der Hand auf die SBR-Probe gepreßt, dann etwa 1 min lang mit einer Presse bei einem Druck von 7 bis 14 bar (100-200 psi). Alternativ dazu wurde der Klebstoff auf beide vorgewärmten Flächen aufgetragen, zunächst mit der Hand zusammengepreßt und dann etwa 1 min lang mit einer Presse bei einem Druck von 7 bis 14 bar (= 100-200 psi). Nach den angegebenen Zeiträumen wurden die Proben hinsichtlich ihrer Schälfestigkeit untersucht, indem sie in eine Instron-Zugmaschine gegeben und mit einer Geschwindigkeit von 1,25 cm/min voneinander gelöst wurden.
Bei der Trockenbindefestigkeit handelt es sich um die Schälfestigkeit im ausgehärteten Zustand nach 7 Tagen.

Die Kriechfestigkeit wurde durch Befestigen eines Gewichts von 500 g am unverklebten Teil des Schuhoberteilmaterials der beim Schälfestigkeitstest verwendeten Proben untersucht. Die Kriechfestigkeit wird in mm/h gemessen. Als "gut" wird ein Wert von kleiner als 10, insbesondere kleiner als 5 mm/h angesehen. Nach Härtung des Klebstoffs wurde dieser Test bei verschiedenen Temperaturen durchgeführt, um auch die Hitzebeständigkeit des Klebstoffs zu bewerten.

Die folgenden Beispiele 1 bis 5 zeigen den Einfluß der Anzahl der Polyesterglykole auf die Anfangsfestigkeit (= Schälfestigkeit nach 5 min).

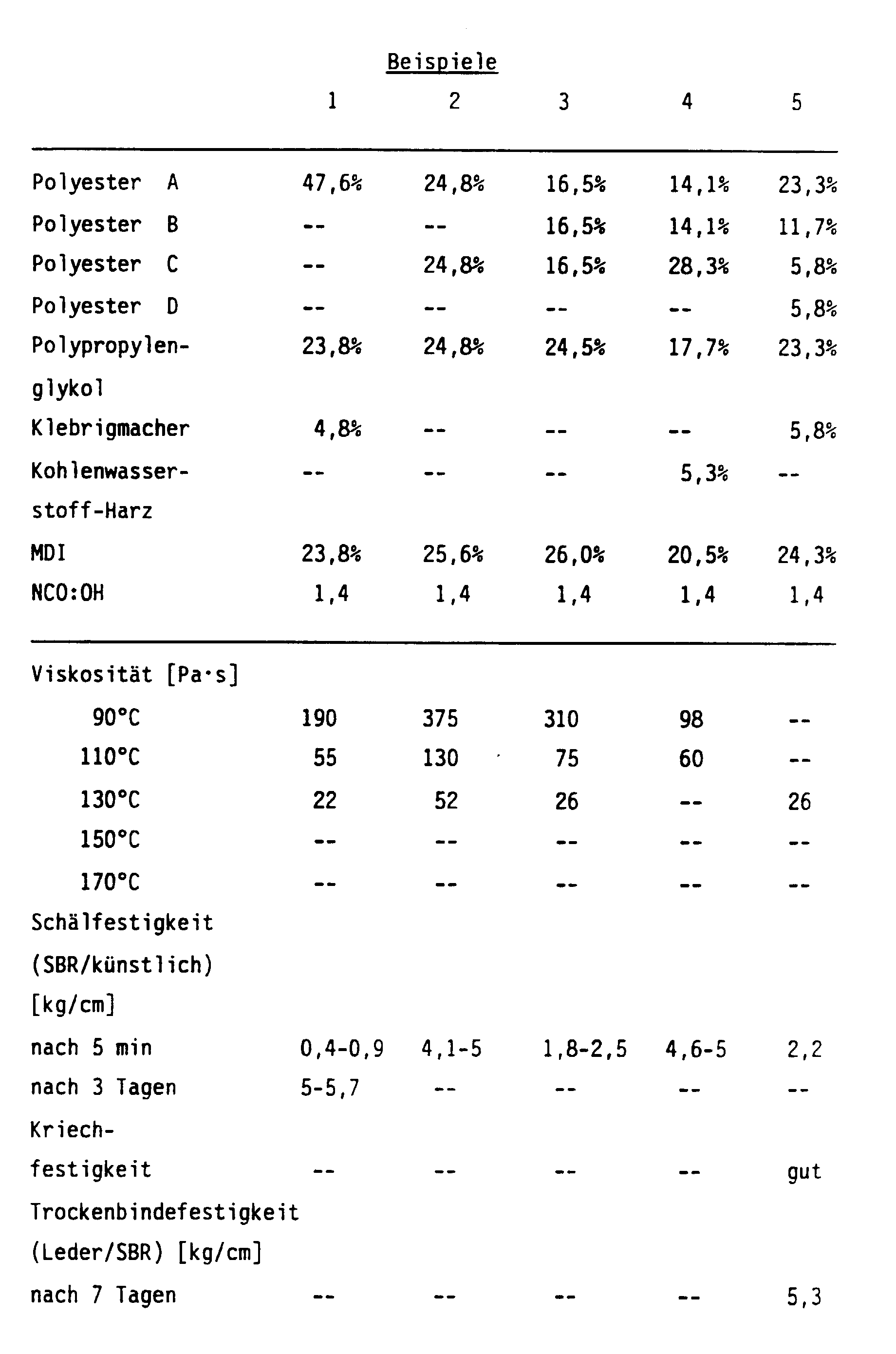

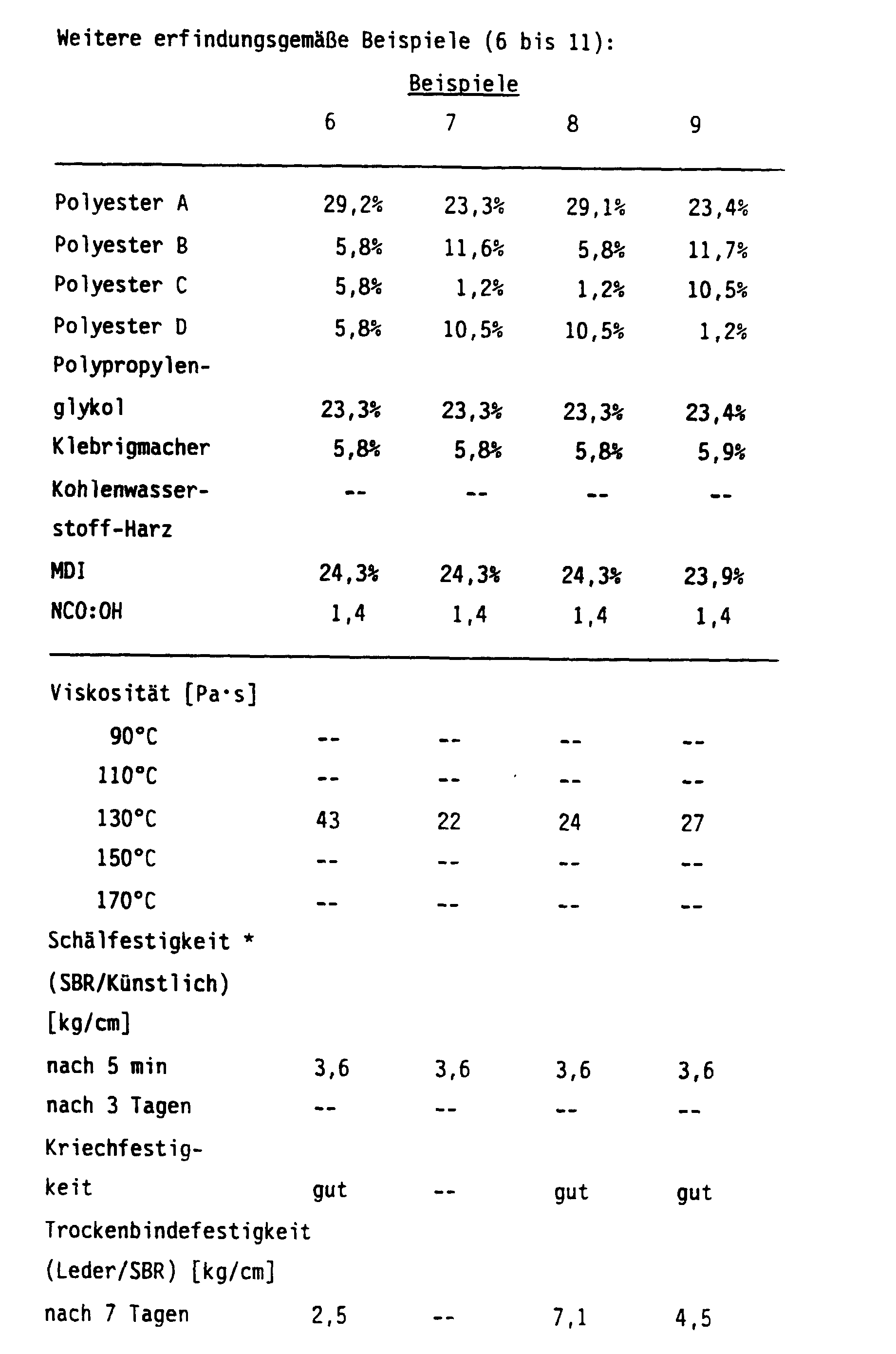

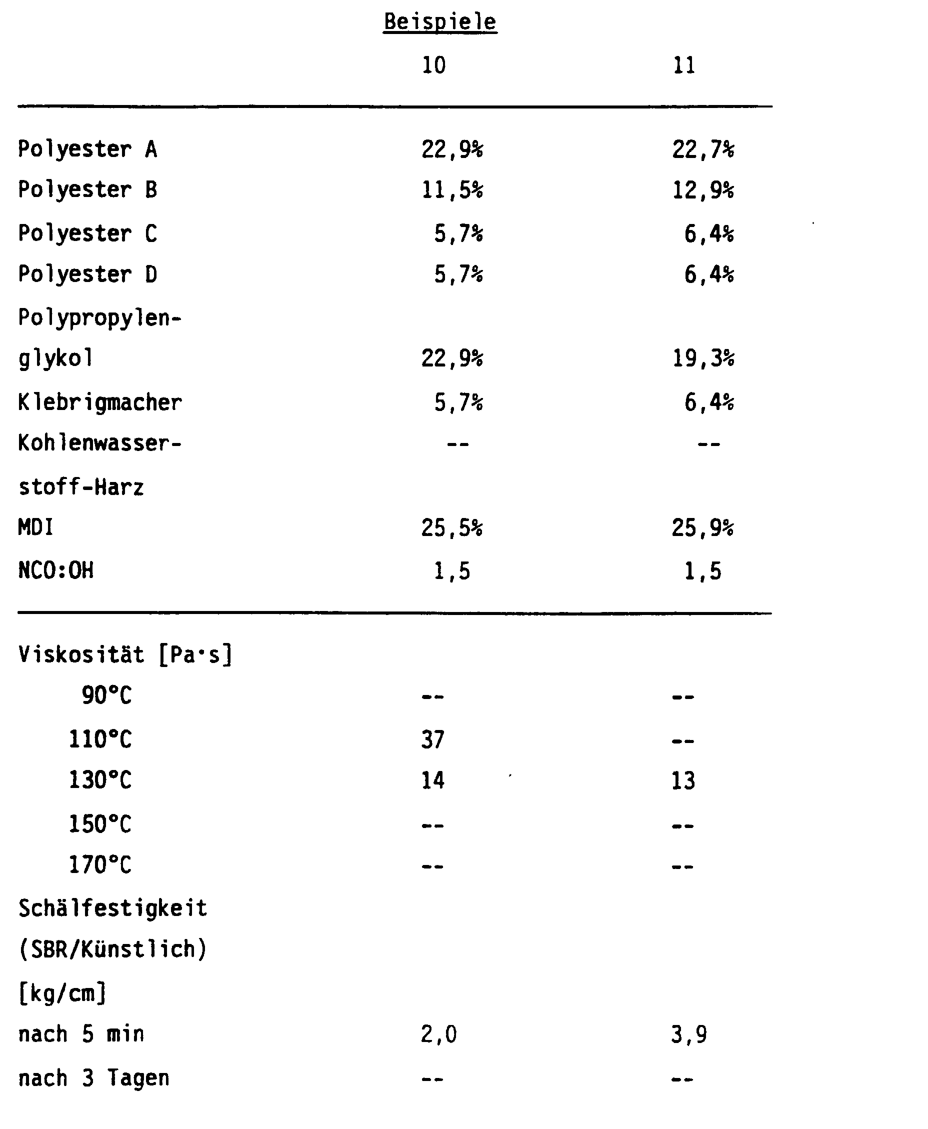

### Beispiel 12

Dieses Beispiel zeigt bevorzugte Zubereitungen für die erfindungsgemäßen Klebstoffzusammensetzungen.

| Material | A | B | C | D | E |
|---|---|---|---|---|---|
| PPG 425 | 29,53% | 23,45% | 28,17% | 23,34% | 23,34% |
| Polyester A | 24,61% | 29,31% | 23,47% | 23,34% | 29,17% |
| Polyester B | 4,92% | 5,86% | 4,69% | 11,67% | 5,83% |
| Polyester I | 4,92% | 5,86% | 4,69% | 5,83% | 5,83% |
| Polyester C | 4,92% | 5,86% | 4,69 | 5,83% | 5,83% |
| Kohlenwasser stoff-Harz | 4,92% | 5,86% | 9,38% | -- | -- |
| Klebrigmacher | -- | -- | -- | 5,83% | 5,83% |
| MDI | 26,18% | 23,80% | 24,91% | 24,16% | 24,15% |
| Verhältnis NCO:OH | 1,3:1 | 1,4:1 | 1,3:1 | 1,4:1 | 1,4:1 |
| Viskosität | | | | | |
| 130°C [Pa·s] | 45-60 | 27-32 | 85 | 27 | 43 |
| Anfangsfestigkeit in [kg/cm] bei 12,5 cm/min | 4,1-5,9 | 5,3 | 4,5 | 2,0 | 4,5 |

Bei den obigen Klebstoffen bedeutet PPG 425 Polypropylenglykol mit einem mittleren Molekulargewicht von 425. Die Polyester-glykole A, B, C und I wurden bereits beschrieben. Der Klebrigmacher ist ein polymerisiertes β-Pinen-Harz. MDI steht für Diphenylmethan-4,4'-diisocyanat.

Die Anfangsfestigkeit wurde bestimmt mit NBR/NBR-Probestreifen von 2,5 cm Breite und 12,5 cm Länge, die auf 80-100°C vorgewärmt wurden. Der Klebstoff wurde bei einer Temperatur von etwa 180°C auf beide Streifen aufgetragen, und die Streifen wurden etwa 1 min lang mit 7 bar (= etwa 100 psi) zusammengedrückt. Es sei an dieser Stelle vermerkt, daß je nach verfügbarem Gerät auch niedrigere Drücke zum Zusammendrücken der Streifen angewandt werden können. Die oben genannten NBR-Probestreifen umfassen eine Nitrilkautschuk-Grundlage mit einer Shore-A-Härte von 80 und sind erhältlich beim Prüf- und Forschungsinstitut für die Schuhherstellung, Pirmasens, Deutschland.

Die Anfangsfestigkeit wurde mit einer Geschwindigkeit von 12,5 cm/min bestimmt (= 5 inch/min). Die erhaltenen Werte wurden von [pli] in [kg/cm] mit Hilfe des Faktors 5,61 umgerechnet.

### Beispiel 13

Dieses Beispiel zeigt, daß zufriedenstellende Polyurethan-Schmelzkleber auch unter Verwendung von hochmolekularen Polyestern hergestellt werden können. Hierbei ist ebenfalls der Gehalt an Polypropylenglykol von Bedeutung.

| Material | |
|---|---|
| PPG 425 | 34,4% |
| Polyester H | 34,4% |
| MDI | 31,2% |
| Verhältnis NCO:OH | 1,4:1 |
| Viskosität, 130°C, | 125 |
| 180°C [Pa·s] | 20 |
| Anfangsfestigkeit in [kg/cm] bei 12,5 cm/min | 4,4-4,8 |

### Beispiel 14

Dieses Beispiel erläutert ein Verfahren zum klebenden Verbinden einer Sohle aus Styrol/Butadien-Kautschuk an ein Schuhoberteil aus Leder. Es umfaßt die folgenden Schritte:

Zunächst wurde die Sohle mit einer herkömmlichen Primerlösung beschichtet und das Lederschuhoberteil mit herkömmlichen Mitteln aufgerauht. Es entstand eine Schicht von etwa 0,5 mm Dicke. Sohle und Schuhoberteil wurden in einer Schuhpresse mit einem Überdruck zwischen 10-20 bar zusammengedrückt und nach etwa 5 min abermals mit einem Druck zwischen 10-20 bar gepreßt. Anfangs- und Endfestigkeit des zusammengesetzten Schuhs wurden als zufriedenstellend für die weitere Verarbeitung und den Gebrauch erachtet.

## Patentansprüche

1. Verwendung des feuchtigkeitshärtenden Polyurethan-Schmelzklebstoffes, enthaltend
A) mindestens ein Polyurethan-Prepolymer aus
a) mindestens einem Polyisocyanat,
b) mindestens einem Polyalkylenglykol in einer Konzentration von mehr als 10 Gew.-%, bezogen auf den Schmelzklebstoff insgesamt,
c) mindestens einem Polyesterglykol mit einer Glasumwandlungstemperatur von -40 bis +50 °C und
B) gegebenenfalls Zusätzen wie
d) ein Harz und
e) einen Stabilisator
in der Schuhindustrie.

2. Verwendung nach Anspruch 1 mit folgender Zusammensetzung des Schmelzklebstoffes:
a) 15 bis 35 Gew.-% an Polyisocyanat,
b) 10 bis 70 Gew.-% an Polyalkylenglykol,
c) 5 bis 65 Gew.-% an Polyesterglykol,
d) 0 bis 15 Gew.-% an Harz und
e) 0 bis 0,5 Gew.-% an Stabilisator.

3. Verwendung nach Anspruch 1 oder 2, dadurch gekennzeichnet, daß das Polyisocyanat ein aromatisches Diisocyanat ist.

4. Verwendung nach Anspruch 1, 2 oder 3, dadurch gekennzeichnet, daß das Polyalkylenglykol ein Polypropylenglykol ist, das ein Molekulargewicht von 250 bis 1 000 hat.

5. Verwendung nach mindestens einem der Ansprüche 1 bis 4, gekennzeichnet durch mindestens 2 Polyesterglykole mit unterschiedlicher Glasumwandlungstemperatur nach DSC-Messungen (Tg).

6. Verwendung nach Anspruch 5, dadurch gekennzeichnet, daß die Glasumwandlungstemperaturen im Bereich von -40 bis +40 °C liegen, wobei eine Glasumwandlungstemperatur unter und eine über 0 °C liegt und wobei die Glastemperaturen mindestens 10 °C auseinander liegen.

7. Verwendung nach mindestens einem der Ansprüche 1 bis 6, dadurch gekennzeichnet, daß die Molekulargewichte der Polyesterglykole zwischen 1 500 und 30 000 liegen.

8. Verwendung nach mindestens einem der Ansprüche 1 bis 7, dadurch gekennzeichnet, daß die Polyesterglykole flüssig, amorph und/oder schwach kristallin sind.

9. Verwendung nach mindestens einem der vorangegangenen Ansprüche, dadurch gekennzeichnet, daß das Harz ein Kohlenwasserstoff-Harz ist.

10. Verwendung nach mindetens einem der vorangegangenen Ansprüche, dadurch gekennzeichnet, daß er Stabilisator Toluolsulfonyl-Isocyanat ist.

11. Verwendung nach mindestens einem der vorangegangenen Ansprüche, dadurch gekennzeichnet, daß das PU-Prepolymer im DSC-Diagramm nur eine Tg hat.

12. Verwendung nach mindestens einem der vorangegangenen Ansprüche, dadurch gekennzeichnet, daß er eine Schmelzviskosität im Bereich von 10 bis 300 Pas bei 130 °C hat.

13. Verwendung nach mindestens einem der vorangegangenen Ansprüche, gekennzeichnet durch die Herstellung des Schmelzklebstoffes im Ein- oder Mehrstufenverfahren.

14. Verwendung des Schmelzklebstoffes nach mindestens einem der vorangegangenen Ansprüche in Auftragsmaschinen, die in die Schuhproduktionslinie integrierbar sind, die keine Vorvernetzungsstufe mit Dampf bzw. keinen Trockenkanal enthält.

15. Verwendung nach Anspruch 14, dadurch gekennzeichnet, daß er zur Befestigung von Sohlen am Schuhobermaterial verwendet wird, und zwar in folgenden Arbeitsschritten:
1. Gegebenenfalls Vorbehandlung der Sohle und/oder des Schuhobermaterials,
2. Auftrag einer Schicht des Schmelzklebstoffes bei 110 bis 180 °C auf mindestens eine der zu befestigenden Flächen, wobei die andere entweder keinen Klebstoff zu enthalten braucht oder aber einen Lösungsmittelklebstoff bzw. einen Dispersionsklebstoff,
3. Zusammendrücken der zu verklebenden Flächen und
4. gegebenenfalls Kühlen der zu verklebenden Fläche.

## Claims

1. The use of a moisture-curing polyurethane hotmelt adhesive containing
A) at least one polyurethane prepolymer of
a) at least one polyisocyanate,
b) at least one polyalkylene glycol in a concentration of more than 10% by weight, based on the hotmelt adhesive as a whole,
c) at least one polyester glycol with a glass transition temperature of -40 to +50°C
and
B) optionally additives, such as
d) a resin and
e) a stabilizer
in the shoe industry.

2. The use claimed in claim 1 with the following composition of the hotmelt adhesive:
a) 15 to 35% by weight of polyisocyanate,
b) 10 to 70% by weight of polyalkylene glycol,
c) 5 to 65% by weight of polyester glycol,
d) 0 to 15% by weight of resin and
e) 0 to 0.5% by weight of stabilizer.

3. The use claimed in claim 1 or 2, characterized in that the polyisocyanate is an aromatic diisocyanate.

4. The use claimed in claim 1, 2 or 3, characterized in that the polyalkylene glycol is a polypropylene glycol with a molecular weight of 250 to 1,000.

5. The use claimed in at least one of claims 1 to 4, characterized by at least two polyester glycols with different glass transition temperatures (Tg) as determined by DSC measurements.

6. The use claimed in claim 5, characterized in that the glass transition temperatures are in the range from -40 to +40°C, one glass transition temperature being below and one above 0°C and the glass temperatures differing by at least 10°C from one another.

7. The use claimed in at least one of claims 1 to 6, characterized in that the molecular weights of the polyester glycols are in the range from 1,500 to 30,000.

8. The use claimed in at least one of claims 1 to 7, characterized in that the polyester glycols are liquid, amorphous and/or slightly crystalline.

9. The use claimed in at least one of the preceding claims, characterized in that the resin is a hydrocarbon resin.

10. The use claimed in at least one of the preceding claims, characterized in that the stabilizer is toluenesulfonyl isocyanate.

11. The use claimed in at least one of the preceding claims, characterized in that the PU prepolymer has only one Tg in the DSC diagram

12. The use claimed in at least one of the preceding claims, characterized in that it has a melt viscosity in the range from 10 to 300 Pas at 130°C.

13. The use claimed in at least one of the preceding claims, characterized by the production of the hotmelt adhesive by a single-stage or multistage process.

14. The use of the hotmelt adhesive as claimed in at least one of the preceding claims in coating machines designed for integration in a shoe production line which does not comprise a steam precrosslinking step or a drying channel.

15. The use claimed in claim 14, characterized in that it is used for securing soles to shoe upper material in the following steps:
1. optionally pretreating the sole and/or the shoe upper material,
2. applying a layer of the hotmelt adhesive at 110 to 180°C to at least one of the surfaces to be joined, the other surface containing either no adhesive or a solvent-based or dispersion adhesive,
3. pressing the surfaces to be bonded together and
4. optionally cooling the surface to be bonded.

## Revendications

1. Utilisation d'une colle par fusion de polyuréthane qui durcit à l'humidité, renfermant :
A) au moins un prépolymére de polyuréthane, à base de :
a) au moins un polyisocyanate
b) au moins un polyalkylèneglycol à une concentration qui n'est pas supérieure à 10 % en poids, rapporté à la colle par fusion dans son ensemble,
c) au moins un glycol de polyester ayant une température de transition vitreuse allant de - 40 à + 50°C et,
B) éventuellement des additifs comme :
d) une résine et
e) un agent stabilisant
dans l'industrie de la chaussure.

2. Utilisation selon la revendication 1 avec la composition suivante de la colle par fusion :
a) de 15 à 35 % en poids de polyisocyanate
b) de 10 à 70 % en poids de polyalkylèneglycol
c) de 5 à 65 % en poids de glycol de polyester
d) de 0 à 15 % en poids de résine et
e) de 0 à 0,5 % en poids d'agent stabilisant.

3. Utilisation selon la revendication 1 ou la revendication 2,
caractérisée en ce que
le polyisocyanate est un diisocyanate aromatique.

4. Utilisation selon la revendication 1 ou la revendication 2 ou la revendication 3,
caractérisée en ce que
le polyalkylèneglycol est un polypropylèneglycol qui a un poids moléculaire allant de 250 à1000.

5. Utilisation selon au moins l'une des revendications 1 à 4,
caractérisée par
au moins 2 glycols de polyester avec une température différente de transition vitreuse selon les mesures par DSC (Tg).

6. utilisation selon la revendication 5,
caractérisée en ce que
les températures de transition vitreuse se situent dans la plage de - 40 à + 40°C pour lesquelles une température de transition vitreuse se situe en dessous et une au-dessus de 0°C et pour lesquelles les températures vitreuses se situent au moins à 10°C l'une de l'autre.

7. utilisation selon au moins l'une des revendications 1 à 6,
caractérisée en ce que
les poids moléculaires des glycols de polyester se situent entre 1500 et 30 000.

8. utilisation selon au moins une des revendications 1 à 7,
caractérisée en ce que
les glycols de polyester sont liquides, amorphes et/ou faiblement cristallins.

9. Utilisation selon au moins une des revendications précédentes,
caractérisée en ce que
la résine est une résine hydrocarbonée.

10. Utilisation selon au moins une des revendications précédentes,
caractérisée en ce que
l'agent stabilisant est l'isocyanate de toluène sulfonyle.

11. Utilisation selon au moins l'une des revendications précédentes,
caractérisée en ce que
le prépolymère de polyuréthane (PU) a seulement un Tg dans le diagramme de DSC.

12. Utilisation selon au moins l'une des revendications précédentes,
caractérisée en ce que
la colle a une viscosité à la fusion dans la zone de 10 à 300 Pa.s à 130°C.

13. Utilisation selon au moins l'une des revendications précédentes,
caractérisée par
la production de la colle par fusion dans un procédé en une ou plusieurs étapes.

14. Utilisation de la colle par fusion selon au mcins l'une des revendications précédentes dans des machines d'application, qui sont intégrables dans la ligne de production des chaussures qui ne renferme aucune étape de prémouillage avec de la vapeur ou aucun canal de séchage.

15. Utilisation selon la revendication 14,
caractérisée en ce que
la colle est utilisée pour la fixation de semelles sue le matériau supérieur de la chaussure et assurément dans les étapes opératoires suivantes :
1- éventuellement prétraitement des semelles et/ou du matériau supérieur de la chaussure,
2- application d'une couche de colle par fusion de 110 à 180°C sur au moins une des surfaces à fixer, pour laquelle l'autre, soit n'a pas besoin de contenir aucune colle, soit cependant contient une colle par solvant ou une colle par dispersion,
3- pressage conjoint des surfaces à coller et éventuellement refroidissement des surfaces à coller.
